# EUROPEAN PATENT SPECIFICATION

(11) **EP 3 775 113 B1**
(45) Date of publication and mention of the grant of the patent: **14.06.2023**
(21) Application number: 19712891.1
(22) Date of filing: 04.04.2019
(51) Int. Cl.: C10L 5/00, C01B 3/30, C01B 32/05, C01B 32/162

(54) **A PROCESS FOR PRODUCING HYDROGEN AND SOLID CARBON PRODUCTS**
VERFAHREN ZUR HERSTELLUNG VON WASSERSTOFF UND FESTEN KOHLENSTOFFPRODUKTEN
PROCÉDÉ DE PRODUCTION D'HYDROGÈNE ET DE PRODUITS CARBONÉS SOLIDES

(30) Priority: 09.04.2018 US 201862654594 P
(43) Date of publication of application: 17.02.2021
(73) Proprietor: Shell Internationale Research Maatschappij B.V., 2596 HR The Hague (NL)
(72) Inventor: SPANU, Leonardo, Houston, TX 77082-3101 (US); MESTERS, Carolus, Matthias, Anna, Maria, Houston, TX 77082-3101 (US)
(74) Representative: Shell Legal Services IP
(86) International application number: PCT/EP2019/058456
(87) International publication number: WO 2019/197257

(56) References cited:
- WO-A1-2007/051213
- US-A- 2 760 847
- US-A- 5 767 165
- US-A1- 2008 210 908
- ABBAS H F ET AL: "Hydrogen production by methane decomposition: A review", INTERNATIONAL JOURNAL OF HYDROGEN ENERGY, ELSEVIER SCIENCE PUBLISHERS B.V., BARKING, GB, vol. 35, no. 3, 1 February 2010 (2010-02-01), pages 1160-1190, XP026874341, ISSN: 0360-3199 [retrieved on 2009-11-27]

## Description

### Field of the Invention

The invention relates to a process for producing hydrogen and carbon products.

### Background of the Invention

Several processes are known for producing hydrogen and carbon products. For example, steam methane reforming is a process that converts natural gas to hydrogen. The methane from the natural gas and water are converted to synthesis gas (a mixture of hydrogen and carbon monoxide) over a catalyst. The carbon monoxide is then converted to carbon dioxide by reaction with water co-producing hydrogen via the water-gas shift reaction. Steam methane reforming is a very energy intensive process and the hydrogen must be separated from the carbon monoxide and carbon dioxide. This separation is quite difficult. In addition, the carbon dioxide produced must be sequestered or otherwise handled to prevent emission to the environment of the carbon dioxide. Other processes for producing hydrogen from hydrocarbons include gasification of coal, coke, oil or natural gas, which also co-produce carbon dioxide.

WO 2007/051213 A relates to the use of a process for hydrogen production in which at least a part of a hydrocarbonaceous feed gas (a) is passed into a reformer (c), wherein the feed gas is contacted in the reformer with a catalyst and the feed gas is converted to hydrogen and solid carbon, for the direct production of a hydrogenous gas at filling stations for sale to a consumer, and also to a reactor (d) for hydrogen production.

US 5 767 165 A discloses a process for the production of methanol from methane containing natural gas comprised of: a. Thermally decomposing said methane to produce hydrogen gas and elemental carbon; wherein this decomposing step is comprised of: i. Bubbling the methane through a bath comprised of a molten material operating at a temperature of at least 800°C and a pressure of 1 to 10 atm.; ii. cracking said methane through the use of said molten material such that elemental carbon and hydrogen gas are formed; iii. Removing the hydrogen gas from the top of the bath; and iv. collecting the elemental carbon off the top of the liquid surface of the bath; and b. Reacting said hydrogen gas with carbon dioxide in a methanol synthesis reactor in the presence of a catalyst to form a product containing methanol.

US 2008/210908 A relates to a method for producing a hydrogen enriched fuel and carbon nanotubes which includes the steps of providing a flow of methane gas, and providing a catalyst mixture comprising a Fe based catalyst and carbon. The method also includes the steps of pretreating the catalyst mixture using microwave irradiation and exposure to CH₄, heating the catalyst mixture and the methane gas using microwave irradiation at a selected microwave power, directing the flow of methane gas over the catalyst mixture, and controlling the microwave power to produce a product gas having a selected composition and the carbon nanotubes.

US 2 760 847 A discloses a method for the production of hydrogen and carbon from normally gaseous hydrocarbons, comprising decomposing such a hydrocarbon charge by contact at decomposition conditions including a temperature in the range of 1200°F to 2000°F with an atomized stream of molten metal contact material wherein said molten metal is characterized in having a melting point in the range of about 445°F to about 1220°F, said contact material containing at least 1% and not more than about 10% by weight of the molten metal of dehydrogenating metal catalyst, said catalyst being at least one of the metals of the group consisting of iron, cobalt, nickel, chromium, molybdenum and platinum.

It would be desirable to develop a process that produces hydrogen that can be used without having to carry out the difficult separation from carbon dioxide/carbon monoxide. In addition, it would be desirable to produce a valuable carbon product from methane in a process that does not co-produce carbon dioxide and does not require a difficult separation of hydrogen from methane.

### Summary of the Invention

The invention provides a process comprising: a) converting natural gas in a first reaction zone under first reaction conditions to produce a first gas stream comprising hydrogen and methane and a first solid carbon product; b) separating at least a portion of the first solid carbon product from the first gas stream; and c) converting at least a portion of the first gas stream in a second reaction zone under second reaction conditions to produce a second gas stream and a second solid carbon product, wherein the second reaction zone comprises a molten metal and/or molten salt.

The invention further provides a process for producing hydrogen and solid carbon comprising: a) contacting natural gas with a catalyst selected from the group consisting of iron, nickel, cobalt and mixtures thereof in a first reaction zone wherein the temperature is in a range of from 700 to 1200 °C to produce a first gas stream comprising hydrogen and unreacted methane and a first solid carbon product comprising carbon nanotubes; b) separating at least a portion of the carbon nanotubes from the first gas stream in a gas/solid separation apparatus; and c) passing at least a portion of the unreacted methane and hydrogen from the first gas stream through a second reaction zone comprising a molten salt/metal bed wherein the molten salt/metal bed comprises metals selected from the group consisting of iron, cobalt, nickel, tin, bismuth, indium, gallium, copper, lead, molybdenum, tungsten or salts selected from the group consisting of alkaline halides and alkaline earth halides or mixtures thereof and the temperature in the second reaction zone is in a range of from 700 to 1200 °C to produce a second gas stream comprising hydrogen and unreacted methane and a second solid carbon product.

### Brief Description of Drawings

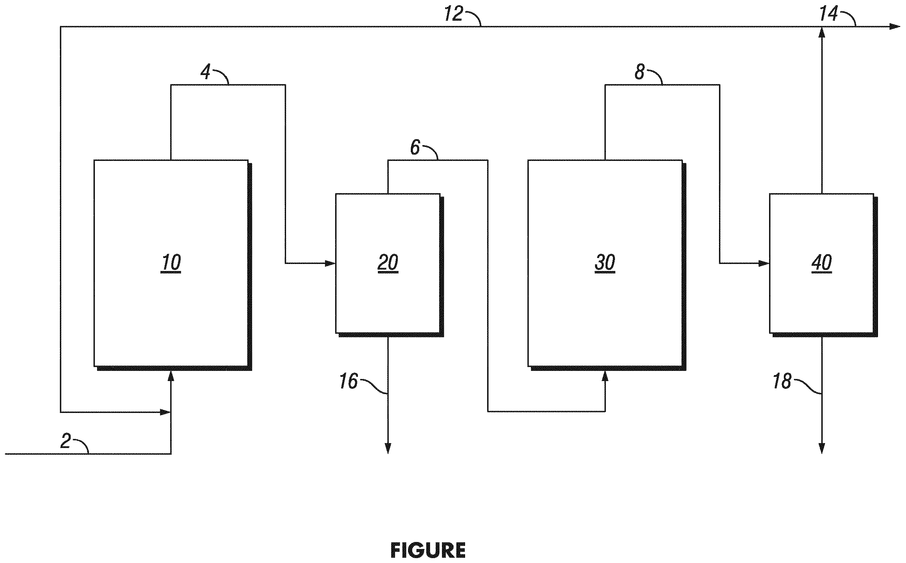

Figure 1 depicts an embodiment of the process.

### Detailed Description of the Invention

The invention provides a process for producing two solid carbon products from natural gas using two separate process steps, and the integration of these two steps provides unique advantages. The two different steps, catalysts, and process conditions will be further described hereinafter.

In the first process step, natural gas is fed to a first reaction zone where it is converted into a first gas stream and a first solid carbon product.

The feed to the first reaction zone comprises methane and is preferably predominantly methane. In addition, the feed may comprise other low carbon number hydrocarbons, for example ethane. The feed may be a natural gas, refinery gas or other gas stream comprising methane. Natural gas is typically about 90+% methane, along with ethane, propane, higher hydrocarbons, and "inerts" like carbon dioxide or nitrogen. The feed may also comprise hydrogen produced in the second reaction zone that may be recycled to this reaction zone.

The feed is contacted with a catalyst in the reaction zone. The catalyst comprises a transition metal or a transition metal compound. For example, the catalyst may comprise iron, nickel, cobalt or mixtures thereof.

The catalyst may be a supported catalyst, and the transition metal may be supported on any suitable support. Suitable supports include Al₂O₃, MgO, SiO₂, TiO₂, and ZrO₂. The support may affect the carbon yields and the structure and morphology of the carbon products produced. In one embodiment, an iron catalyst that is supported on either alumina or magnesium oxide is used. The catalyst may be doped with molybdenum or a molybdenum containing compound.

In one embodiment, the catalyst is used in a fluidized bed reactor, so the catalyst has the proper characteristics to facilitate fluidization.

In another embodiment, the catalyst is generated in-situ in the first reaction zone via injection of a catalyst precursor to the first reaction zone. Suitable catalyst precursors include metal carbonyls and metallocenes.

The first reaction may be carried out in any suitable reactor, but the first reaction zone is preferably a gas/solid reactor. The reaction zone is operated at conditions that are suitable for producing a first carbon product. In one embodiment, using a supported catalyst, the gas-solid reactor is operated as a fluidized bed reactor with a temperature greater than 600 °C, preferably from 700 to 1300 °C and more preferably from 700 to 1200 °C. In another embodiment, a catalyst precursor is contacted with the feed in the first reaction zone at a temperature of 300 to 600 °C to form the solid catalyst that reacts with the feed at higher temperatures, up to 1300 °C in the remaining part of the first reaction zone.

In one embodiment, the reaction is carried out in the substantial absence of oxygen. The substantial absence of oxygen means that there is no detectable oxygen present in the reaction zone. In another embodiment, the concentration of oxygen is less than 100 ppmw, preferably less than 30 ppmw, and more preferably less than 10 ppmw.

In one embodiment, the reaction is carried out in the substantial absence of water. The substantial absence of water means that there is no detectable water present in the reaction zone. In another embodiment, the concentration of water is less than 100 ppmw, preferably less than 30 ppmw, and more preferably less than 10 ppmw.

The catalyst and process conditions are preferably selected to provide a conversion of methane in the range of from 3 to 75 wt%, preferably from 3 to 45 wt% most preferably 3-15wt%. The selectivity to the desired carbon product is higher when this reaction is operated at a relatively low conversion.

The first reaction zone produces a first solid carbon product. The carbon product preferably comprises carbon nanotubes. Carbon nanotubes are allotropes of carbon having a nanostructure where the length-to-diameter ratio is greater than 10,000; preferably greater than 100,000; and more preferably greater than 1,000,000. The diameter of a carbon nanotube is typically on the order of a few nanometers, while the length is on the order of a few millimeters. Carbon nanotubes are generally cylindrical in shape and have a fullerene cap. The nanotubes can have a single wall, double wall or multiple walls. Multiwalled nanotubes include multiple layers of graphene rolled in on themselves to form a tube shape. Single walled nanotubes are generally preferred for many applications because they have fewer defects, are stronger and more conductive than multiwalled nanotubes. Carbon nanotubes can be used in a variety of applications including nanoscale electronic devices, high strength materials, field emission devices and gas storage.

In addition to the carbon nanotubes, a first gas stream is produced that comprises hydrogen; any unreacted methane; hydrocarbon pyrolysis products from methane, for example, acetylene. The first gas stream may also comprise any higher hydrocarbons and inerts that were present in the feed to the first reaction zone.

The first carbon product and the first gas stream exit the reactor through one or more outlets, but in one embodiment, the products exit the top of the fluidized bed reactor through a common outlet. This combined product stream is passed to a gas/solid separator to separate the carbon product from the gas stream. The gas/solid separator may comprise one or more cyclones and/or one or more electrostatic precipitators. The carbon product is removed as a product and at least a portion of the first gas stream is passed to the second process zone. In other processes that may include a similar reaction for producing carbon nanotubes, the gas stream is typically burned as fuel due to the low value and difficulty in separating the hydrogen from the unreacted methane.

In the second process step, at least a portion of the first gas stream is fed to a second reaction zone where it is converted into a second gas stream and a second carbon product. By feeding the gas stream from the first step, the gas stream can be effectively monetized at a value that is greater than that realized by typical carbon nanotube processes where the gas stream would have been burned as fuel.

The gas stream that is fed to the second reaction zone comprises methane and hydrogen. In addition to the first gas stream from the first reaction zone and separation step, additional methane and/or hydrogen may be added before it is fed to the second reaction zone. In addition, the feed may comprise one or more inert gases, for example, nitrogen.

The second reaction zone comprises a molten salt or molten metal or mixtures thereof. The molten metals preferably comprise iron, cobalt, nickel, tin, bismuth, indium, gallium, copper, lead, molybdenum, tungsten or mixtures thereof. The molten salts may be alkali halides or alkaline earth halides. The molten salts preferably comprise lithium chloride, sodium chloride, potassium chloride, cesium chloride, magnesium chloride, calcium chloride, strontium chloride, barium chloride or mixtures thereof. The molten salt/metal is present in the reaction zone at a temperature above its melting point.

Preferred molten salts/metals may have a high thermal conductivity, a high density compared to carbon, and long term chemical stability. The molten salt/metal is chemically stable and can be used at temperatures up to about 1300 °C.

In one embodiment, a solid catalyst is dispersed in the molten phase. The feed may be added at the bottom of the bed and the reaction is carried out as the feed passes through the molten salt/metal bed.

In prior art processes, significant problems were seen due to the deposition of solid carbon layers on the reactor walls. The use of a molten salt/metal bed where the solid carbon is formed in the bed prevents this carbon deposition on the walls.

The second reaction may be carried out in any suitable reactor vessel. The feed is injected into the reaction zone and bubbles up through the molten salt/metal bed. The methane is decomposed inside of the bubbles as they rise in the reactor. When the bubbles reach the surface, the hydrogen, carbon and any unreacted methane is released. The hydrogen and unreacted methane are removed as a second gas stream and the solid carbon product remains at the surface. In some embodiments, additional separation steps may be needed to separate the solid carbon product from the molten salt/metal bed.

Another important feature of the reactor is that it needs to be resistant to corrosion caused by the high temperature salt or metal. In one embodiment, the reactor may be a packed column.

The reaction is carried out at a temperature in the range of from 600 to 1300 °C, preferably from 700 to 1200 °C.

For those skilled in the art, it is evident that the methane conversion is limited to thermodynamic constraints depending on the temperature, pressure and feed composition. The catalyst and process conditions are preferably selected to provide a conversion of methane in the range of from 50 wt% to the thermodynamic limitation, preferably of from 75 wt% to the thermodynamic limitation. The methane conversion may be from 50 wt% to 100 wt%, preferably from 75 wt% to 100 wt%.

The second reaction zone produces a second solid carbon product and a second gas stream comprising hydrogen. The second gas stream may comprise at least 50 vol% hydrogen, preferably at least 75 vol% hydrogen and more preferably at least 90 vol% hydrogen.

In this reaction zone, carbon dioxide is not formed, so there is no need to separate carbon dioxide from the hydrogen before it can be used in other reactions. In addition to hydrogen in the second gas stream, any unreacted methane will not negatively impact most downstream processes, including ammonia synthesis. This provides an advantage over other hydrogen production processes, for example, steam methane reforming which does produce carbon dioxide.

For example, in the production of ammonia, carbon dioxide is a catalyst poison, and thus a hydrogen stream that is free of carbon dioxide is especially beneficial for use in the production of ammonia. The carbon monoxide and/or carbon dioxide from a steam methane reforming process may need to be hydrogenated to methane to avoid poisoning, for example, ammonia synthesis catalyst which would require an additional reaction step that is not needed in this process.

The second solid carbon product has a lower density than the molten salt/metal, so the solid carbon product stays at the top of the molten salt/metal bed which makes separation easier. The solid carbon product can be used as a raw material to produce color pigments, fibers, foil, cables, activated carbon or tires. In addition, the solid carbon product may be mixed with other materials to modify the mechanical, thermal, and/or electric properties of those materials. The final carbon morphology of the solid carbon product is controlled by the selection of the salt/metal, optional solid catalyst and reaction conditions.

In addition to the hydrogen, the gas stream may additionally comprise unreacted methane. Due to the high conversion in this second process step, the amount of unreacted methane is low, and if it is sufficiently low then a gas separation step to separate the methane from the hydrogen is not necessary. If a higher purity of hydrogen is required, pressure swing adsorption processes (PSA) can be used very efficiently because of the relatively low level of methane in the second gas stream.

By combining these two process steps, two different solid carbon products can be produced. In addition, a pure hydrogen stream can be produced that can be used in several different processes. The integration of these two process steps provides a hydrogen stream free from carbon monoxide/carbon dioxide impurities that does not require a separation from a methane stream. Further, a portion of the first carbon product formed is a highly valuable carbon nanotube product.

Figure 1 depicts one embodiment of the process. In this embodiment, a feed comprising methane is passed via feed line 2 to a reactor 10. The reactor comprises a catalyst, and the methane is converted by methane pyrolysis into hydrogen and a solid carbon product. The reactor may be a fluidized bed reactor. The products are passed via line 4 to a separator 20 where the gaseous products are removed via line 6 and the solid products are removed via line 16. The gaseous product comprises a significant quantity of hydrogen and unreacted methane and the solid products are solid carbon products. Any entrained catalyst may be optionally separated from the carbon product and recycled to the reactor. The gaseous product is passed to a second reactor 30 where at least a portion of the unreacted methane is converted into additional hydrogen and additional solid products. This reactor preferably comprises a molten salt/metal bed. The products are removed via line 8 and then separated in separator 40. The gaseous product comprises hydrogen which may be removed as a product via line 14. Other gaseous products and optionally a portion of the hydrogen may be recycled to reactor 10 via line 12. The solid carbon products are removed via line 18.

## Claims

1. A process comprising:
a. converting natural gas in a first reaction zone under first reaction conditions to produce a first gas stream comprising hydrogen and methane and a first solid carbon product;
b. separating at least a portion of the first solid carbon product from the first gas stream; and
c. converting at least a portion of the first gas stream in a second reaction zone under second reaction conditions to produce a second gas stream and a second solid carbon product, wherein the second reaction zone comprises a molten metal and/or molten salt.

2. The process of claim 1 wherein the first reaction conditions comprise a temperature greater than 600°C.

3. The process of claim 1 or 2 wherein the first reaction conditions comprise a temperature in the range of from 700 to 1300°C.

4. The process of any of claims 1-3 wherein the natural gas conversion in the first reaction zone is carried out in the absence of oxygen and water.

5. The process of any of claims 1-4 wherein the natural gas comprises methane and the first reaction conditions are selected such that the amount of methane converted in the first reaction zone is from about 3 to about 25 wt%.

6. The process of any of claims 1-5 wherein the first carbon product comprises carbon nanotubes.

7. The process of any of claims 1-6 wherein the separation is carried out in a cyclone or electrostatic precipitator.

8. The process of any of claims 1-7 wherein the molten metal is selected from the group consisting of iron, cobalt, nickel, tin, bismuth, indium, gallium, copper, lead, molybdenum, tungsten or mixtures thereof.

9. The process of any of claims 1-7 wherein the molten salt is selected from the group consisting of lithium chloride, sodium chloride, potassium chloride, cesium chloride, magnesium chloride, calcium chloride, strontium chloride, barium chloride or mixtures thereof.

10. The process of any of claims 1-9 wherein the second reaction conditions comprise a temperature in the range of from 600 to 1300°C.

11. The process of any of claims 1-10 wherein the second reaction conditions are selected such that the amount of methane converted in the second reaction zone is from about 50 to about 100 wt%.

12. The process of any of claims 1-11 wherein the second gas stream contains at least 50 vol% hydrogen.

13. The process of any of claims 1-12 wherein the second carbon product has a lower density than the molten metal and/or molten salt.

14. The process of any of claims 1-13 further comprising separating the second carbon product from the molten metal and/or molten salt.

15. A process for producing hydrogen and solid carbon comprising:
a. contacting natural gas with a catalyst selected from the group consisting of iron, nickel, cobalt and mixtures thereof in a first reaction zone wherein the temperature is in a range of from 700 to 1200°C to produce a first gas stream comprising hydrogen and unreacted natural gas and a first solid carbon product comprising carbon nanotubes;
b. separating at least a portion of the carbon nanotubes from the first gas stream in a gas/solid separation apparatus; and
c. passing at least a portion of the unreacted natural gas and hydrogen through a second reaction zone comprising a molten salt/metal bed wherein the molten salt/metal bed comprises metals selected from the group consisting of iron, cobalt, nickel, tin, bismuth, indium, gallium, copper, lead, molybdenum, tungsten or salts selected from the group consisting of alkaline halides and alkaline earth halides or mixtures thereof and the temperature in the second reaction zone is in a range of from 700 to 1200°C to produce a second gas stream comprising hydrogen and unreacted natural gas and a second solid carbon product.

## Patentansprüche

1. Verfahren, umfassend:
a. Umsetzen von Erdgas in einer ersten Reaktionszone unter ersten Reaktionsbedingungen, um einen ersten Gasstrom herzustellen, umfassend Wasserstoff und Methan und ein erstes festes Kohleprodukt;
b. Trennen mindestens eines Teils des ersten festen Kohleprodukts von dem ersten Gasstrom; und
c. Umsetzen mindestens eines Teils des ersten Gasstroms in einer zweiten Reaktionszone unter zweiten Reaktionsbedingungen, um einen zweiten Gasstrom und ein zweites festes Kohleprodukt herzustellen, wobei die zweite Reaktionszone ein geschmolzenes Metall und/oder ein geschmolzenes Salz umfasst.

2. Verfahren nach Anspruch 1, wobei die ersten Reaktionsbedingungen eine Temperatur von über 600 °C umfassen.

3. Verfahren nach Anspruch 1 oder 2, wobei die ersten Reaktionsbedingungen eine Temperatur im Bereich von 700 bis 1.300 °C umfassen.

4. Verfahren nach einem der Ansprüche 1 bis 3, wobei der Erdgasumsatz in der ersten Reaktionszone in Abwesenheit von Sauerstoff und Wasser durchgeführt wird.

5. Verfahren nach einem der Ansprüche 1 bis 4, wobei das Erdgas Methan umfasst und die ersten Reaktionsbedingungen derart ausgewählt sind, dass die Menge an Methan, die in der ersten Reaktionszone umgesetzt wird, von etwa 3 bis etwa 25 Gew.-% beträgt.

6. Verfahren nach einem der Ansprüche 1 bis 5, wobei das erste Kohleprodukt Kohlenstoffnanoröhren umfasst.

7. Verfahren nach einem der Ansprüche 1 bis 6, wobei die Trennung in einem Wirbler oder einem Elektroabscheider durchgeführt wird.

8. Verfahren nach einem der Ansprüche 1 bis 7, wobei das geschmolzene Metall aus der Gruppe ausgewählt ist, bestehend aus Eisen, Kobalt, Nickel, Zinn, Wismut, Indium, Gallium, Kupfer, Blei, Molybdän, Wolfram oder Mischungen davon.

9. Verfahren nach einem der Ansprüche 1 bis 7, wobei das geschmolzene Salz aus der Gruppe ausgewählt ist, bestehend aus Lithiumchlorid, Natriumchlorid, Kaliumchlorid, Cäsiumchlorid, Magnesiumchlorid, Calciumchlorid, Strontiumchlorid, Bariumchlorid oder Mischungen davon.

10. Verfahren nach einem der Ansprüche 1 bis 9, wobei die zweiten Reaktionsbedingungen eine Temperatur im Bereich von 600 bis 1.300 °C umfassen.

11. Verfahren nach einem der Ansprüche 1 bis 10, wobei die zweiten Reaktionsbedingungen derart ausgewählt sind, dass die Menge an Methan, die in der zweiten Reaktionszone umgesetzt wird, von etwa 50 bis etwa 100 Gew.-% beträgt.

12. Verfahren nach einem der Ansprüche 1 bis 11, wobei der zweite Gasstrom mindestens 50 Vol.-% Wasserstoff enthält.

13. Verfahren nach einem der Ansprüche 1 bis 12, wobei das zweite Kohleprodukt eine geringere Dichte als das geschmolzene Metall und/oder das geschmolzene Salz aufweist.

14. Verfahren nach einem der Ansprüche 1 bis 13, ferner umfassend das Trennen des zweiten Kohleprodukts von dem geschmolzenen Metall und/oder dem geschmolzenen Salz.

15. Verfahren zum Herstellen von Wasserstoff und festem Kohlenstoff, umfassend:
a. Inkontaktbringen von Erdgas mit einem Katalysator, der aus der Gruppe ausgewählt ist, bestehend aus Eisen, Nickel, Kobalt und Mischungen davon, in einer ersten Reaktionszone, wobei die Temperatur in einem Bereich von 700 bis 1.200 °C ist, um einen ersten Gasstrom herzustellen, umfassend Wasserstoff und nicht umgesetztes Erdgas und ein erstes festes Kohleprodukt, umfassend Kohlenstoffnanoröhren;
b. Trennen mindestens eines Teils der Kohlenstoffnanoröhren von dem ersten Gasstrom in einer Gas-Feststoff-Trennvorrichtung; und
c. Leiten mindestens eines Teils des nicht umgesetzten Erdgases und des Wasserstoffs durch eine zweite Reaktionszone, umfassend ein geschmolzenes Salz-/Metallbett, wobei das geschmolzene Salz-/Metallbett Metalle, die aus der Gruppe ausgewählt sind, bestehend aus Eisen, Kobalt, Nickel, Zinn, Wismut, Indium, Gallium, Kupfer, Blei, Molybdän, Wolfram, oder Salze umfasst, die aus der Gruppe ausgewählt sind, bestehend aus Alkalihalogeniden und Erdalkalihalogeniden oder Mischungen davon, und die Temperatur in der zweiten Reaktionszone in einem Bereich von 700 bis 1.200 °C ist, um einen zweiten Gasstrom herzustellen, umfassend Wasserstoff und nicht umgesetztes Erdgas und ein zweites festes Kohleprodukt.

## Revendications

1. Procédé comprenant :
a. la conversion de gaz naturel dans une première zone de réaction dans des premières conditions de réaction pour produire un premier courant gazeux comprenant de l'hydrogène et du méthane et un premier produit carboné solide ;
b. la séparation d'au moins une partie du premier produit carboné solide par rapport au premier courant gazeux ; et
c. la conversion d'au moins une partie du premier courant gazeux dans une seconde zone de réaction dans des secondes conditions de réaction pour produire un second courant gazeux et un second produit carboné solide, dans lequel la seconde zone de réaction comprend un métal fondu et/ou un sel fondu.

2. Procédé selon la revendication 1 dans lequel les premières conditions de réaction comprennent une température supérieure à 600 °C.

3. Procédé selon la revendication 1 ou 2 dans lequel les premières conditions de réaction comprennent une température dans la plage allant de 700 à 1300 °C.

4. Procédé selon l'une quelconque des revendications 1 à 3 dans lequel la conversion de gaz naturel dans la première zone de réaction est effectuée en l'absence d'oxygène et d'eau.

5. Procédé selon l'une quelconque des revendications 1 à 4 dans lequel le gaz naturel comprend du méthane et les premières conditions de réaction sont choisies de telle sorte que la quantité de méthane convertie dans la première zone de réaction va d'environ 3 à environ 25 % en poids.

6. Procédé selon l'une quelconque des revendications 1 à 5 dans lequel le premier produit carboné comprend des nanotubes de carbone.

7. Procédé selon l'une quelconque des revendications 1 à 6 dans lequel la séparation est effectuée dans un cyclone ou un précipitateur électrostatique.

8. Procédé selon l'une quelconque des revendications 1 à 7 dans lequel le métal fondu est choisi dans le groupe constitué de fer, cobalt, nickel, étain, bismuth, indium, gallium, cuivre, plomb, molybdène, tungstène ou mélanges de ceux-ci.

9. Procédé selon l'une quelconque des revendications 1 à 7 dans lequel le sel fondu est choisi dans le groupe constitué de chlorure de lithium, chlorure de sodium, chlorure de potassium, chlorure de césium, chlorure de magnésium, chlorure de calcium, chlorure de strontium, chlorure de baryum ou mélanges de ceux-ci.

10. Procédé selon l'une quelconque des revendications 1 à 9 dans lequel les secondes conditions de réaction comprennent une température dans la plage allant de 600 à 1300 °C.

11. Procédé selon l'une quelconque des revendications 1 à 10 dans lequel les secondes conditions de réaction sont choisies de telle sorte que la quantité de méthane convertie dans la seconde zone de réaction va d'environ 50 à environ 100 % en poids.

12. Procédé selon l'une quelconque des revendications 1 à 11 dans lequel le second courant gazeux contient au moins 50 % en volume d'hydrogène.

13. Procédé selon l'une quelconque des revendications 1 à 12 dans lequel le second produit carboné a une plus faible masse volumique que le métal fondu et/ou le sel fondu.

14. Procédé selon l'une quelconque des revendications 1 à 13 comprenant en outre la séparation du second produit carboné par rapport au métal fondu et/ou au sel fondu.

15. Procédé de production d'hydrogène et de carbone solide comprenant :
a. la mise en contact de gaz naturel avec un catalyseur choisi dans le groupe constitué de fer, nickel, cobalt et mélanges de ceux-ci dans une première zone de réaction dans lequel la température est dans une plage allant de 700 à 1200 °C pour produire un premier courant gazeux comprenant de l'hydrogène et du gaz naturel n'ayant pas réagi et un premier produit carboné solide comprenant des nanotubes de carbone ;
b. la séparation d'au moins une partie des nanotubes de carbone par rapport au premier courant gazeux dans un appareil de séparation gaz/solide ; et
c. le passage d'au moins une partie du gaz naturel n'ayant pas réagi et de l'hydrogène à travers une seconde zone de réaction comprenant un lit de sel/métal fondu dans lequel le lit de sel/métal fondu comprend des métaux choisis dans le groupe constitué de fer, cobalt, nickel, étain, bismuth, indium, gallium, cuivre, plomb, molybdène, tungstène ou des sels choisis dans le groupe constitué d'halogénures alcalins et halogénures alcalino-terreux ou mélanges de ceux-ci et la température dans la seconde zone de réaction est dans une plage allant de 700 à 1200 °C pour produire un second courant gazeux comprenant de l'hydrogène et du gaz naturel n'ayant pas réagi et un second produit carboné solide.
